# EUROPÄISCHE PATENTSCHRIFT

(11) **EP 3 118 086 B1**
(45) Veröffentlichungstag und Bekanntmachung des Hinweises auf die Patenterteilung: **13.12.2017**
(21) Anmeldenummer: 15176808.2
(22) Anmeldetag: 15.07.2015
(51) Int. Cl.: B62D 21/11

(54) **HILFSRAHMEN, INSBESONDERE HINTERACHSHILFSRAHMEN, FÜR EIN KRAFTFAHRZEUG**
SUBFRAME, IN PARTICULAR REAR AXLE SUBFRAME, FOR A MOTOR VEHICLE
FAUX-CHÂSSIS, PLUS PARTICULIÈREMENT FAUX-CHÂSSIS D'ESSIEU ARRIÈRE, POUR UN VÉHICULE AUTOMOBILE

(43) Veröffentlichungstag der Anmeldung: 18.01.2017
(73) Patentinhaber: Autotech Engineering Deutschland GmbH, 33647 Bielefeld (DE)
(72) Erfinder: Chapple, Adrian, Co. Durham, DH3 1RS (GB)
(74) Vertreter: Cohausz & Florack

(56) Entgegenhaltungen:
- EP-A1- 2 514 656
- DE-A1-102007 012 148
- DE-A1-102012 011 797
- DE-A1-102012 111 461
- DE-U1-202008 017 274

## Beschreibung

Die Erfindung betrifft einen Hilfsrahmen, insbesondere Hinterachshilfsrahmen, für ein Kraftfahrzeug, mit mindestens zwei Längsträgern, mindestens zwei Querträgern, welche die Längsträger miteinander verbinden und in Fahrzeuglängsrichtung voneinander beabstandet sind, Karosserie-Anbindungselementen, die an Trägerabschnitten des Hilfsrahmens angeordnet sind, welche gegenüber einem Verbindungsabschnitt, an welchem einer der Längsträger mit einem der Querträger verbunden ist, seitlich nach außen vorstehen, und mit einer vorderen und einer hinteren Lenkeraufnahme je Fahrzeugseite, die in Fahrzeuglängsrichtung voneinander beabstandet sind.

Ein derartiger Hilfsrahmen in Form eines Hinterachshilfsrahmens ist aus der DE 10 2012 111 461 A1 bekannt. Der bekannte Hilfsrahmen weist eine Zusatzstrebe auf, die sich durch den von den Längsträgern und Querträgern umgrenzten Raum erstreckt, mit einem ersten Endabschnitt am vorderen Querträger angeschlossen ist, mit einem zweiten Endabschnitt am hinteren Querträger angeschlossen ist, zur Fahrzeuglängsrichtung unter einem Winkel schräg angestellt ist und mindestens einen Befestigungsabschnitt aufweist, der zur Anbindung mindestens einer Diagonalstrebe ausgebildet ist. Hierdurch soll für eine Kraftfahrzeugbodengruppe eine zusätzliche Versteifung bereitgestellt werden, welche es ermöglicht, unter Beibehaltung oder Steigerung der Torsionssteifigkeit des Fahrzeugs das Gesamtgewicht der Versteifungsstruktur zu reduzieren.

Der Erfindung liegt die Aufgabe zugrunde, einen Hilfsrahmen der eingangs genannten Art zu schaffen, der unter Beibehaltung oder Steigerung seiner Steifigkeit, insbesondere Torsionssteifigkeit, ein relativ geringes Gewicht aufweist und ausreichend Bauraum zur Anbindung von Lenkern der Radaufhängung, insbesondere zweier Trapezlenker bietet. Durch die Beibehaltung oder Steigerung der Steifigkeit des Hilfsrahmens sollen Schwingungen, die beim Fahren auftreten, zu dem Fahrgastraum übertragen werden und den Fahrkomfort beeinträchtigen, vermieden werden.

Diese Aufgabe wird durch einen Hilfsrahmen mit den in Anspruch 1 angegebenen Merkmalen gelöst. Bevorzugte und vorteilhafte Ausgestaltungen des erfindungsgemäßen Hilfsrahmens sind in den Unteransprüchen angegeben.

Der erfindungsgemäße Hilfsrahmen ist dadurch gekennzeichnet, dass je Fahrzeugseite mindestens eine Versteifungsstrebe vorgesehen ist, die an einen Abschnitt eines der Längsträger angeschlossen ist, welcher sich zwischen den Lenkeraufnahmen befindet, und die mit einem Endabschnitt an eines der Karosserie-Anbindungselemente oder an einen der seitlich nach außen vorstehenden Trägerabschnitte angeschlossen ist.

Bei dem seitlich nach außen vorstehenden Trägerabschnitt handelt es sich vorzugsweise um einen Abschnitt eines der Querträger, insbesondere des vorderen Querträgers. Alternativ kann der seitlich nach außen vorstehende Trägerabschnitt aber auch durch einen Endabschnitt eines der Längsträger definiert sein.

Unter einer Versteifungsstrebe im Sinne der Erfindung ist ein längliches Bauteil zu verstehen, das schräg zur Mittelachse des Hilfsrahmens bzw. Fahrzeugmittelachse verläuft und somit auch als diagonale Versteifungsstrebe oder Diagonalstrebe bezeichnet werden kann. Die Versteifungsstrebe stellt einen zusätzlichen Lastpfad an dem Hilfsrahmen dar.

Die erfindungsgemäße Konstruktion bietet ausreichend Bauraum zur Anbindung zweier Trapezlenker, wobei mindestens eine dem jeweiligen Trapezlenker zugeordnete Lenkeraufnahme in einem konkaven oder zwickelförmigen Raum angeordnet werden kann, der durch einen der Längsträger und einen der seitlich nach außen vorstehenden Trägerabschnitte begrenzt ist. Durch die Versteifungsstreben und deren erfindungsgemäße Anordnung, insbesondere durch deren Ausrichtung in Bezug auf die Längsträger und die seitlich nach außen vorstehenden Trägerabschnitte, lässt sich ein relativ leichter, materialsparender Hilfsrahmen mit hoher Steifigkeit erzielen. Durch die Versteifungsstreben können zumindest die nach außen vorstehenden Trägerabschnitte mit kleinerem Durchmesser und/oder dünnerer Wandstärke und damit leichter ausgeführt werden ohne die Steifigkeit des Hilfsrahmens zu verringern. Interne Versuche haben ergeben, dass sich durch die erfindungsgemäß angeordneten Versteifungsstreben unter Beibehaltung der Steifigkeit des Hilfsrahmens eine Gewichtsreduzierung des Hilfsrahmen von beispielsweise ca. 10% erzielen lässt.

Die Versteifungsstreben erhöhen die Steifigkeit des Hilfsrahmens im Bereich der Karosserie-Anbindungselemente und verbessern das NVH-Verhalten des Hilfsrahmens; beides vermeidet Schwingungen bzw. deren Übertragung in den Fahrgastraum und trägt somit zu einem hohen Fahrkomfort bei. NVH ist die Abkürzung für Noise, Vibration, Harshness (Geräusch, Vibration, Rauheit) und auch bereits im deutschsprachigen Raum die Bezeichnung für als Geräusch hörbare und/oder als Vibration spürbare Schwingungen in Kraftfahrzeugen oder an Maschinen.

Eine bevorzugte Ausgestaltung des erfindungsgemäßen Hilfsrahmens ist dadurch gekennzeichnet, dass der Längsträger, der seitlich nach außen vorstehende Trägerabschnitt und die Versteifungsstrebe zusammen eine durchgängige Öffnung umgrenzen, die eine der Lenkeraufnahmen vollständig oder teilweise umschließt. Diese Ausgestaltung ermöglicht hinsichtlich des für die Anbindung zweier Trapezlenker benötigten Bauraums eine besonders günstige Struktur des Hilfsrahmens.

Eine weitere bevorzugte Ausgestaltung des erfindungsgemäßen Hilfsrahmens sieht vor, dass die seitlich nach außen vorstehenden Trägerabschnitte Abschnitte eines der Querträger, vorzugsweise des bezogen auf die Vorwärtsfahrtrichtung vorderen Querträgers sind. Diese Ausgestaltung vereinfacht die Herstellung der Rahmenstruktur des erfindungsgemäßen Hilfsrahmens. Denn bei dieser Ausgestaltung kann die Rahmenstruktur des Hilfsrahmens zum Beispiel aus miteinander zu verschweißenden Rohren hergestellt werden, wobei die Längsträger aus im Wesentlichen geraden Rohren oder aus im Vergleich zu geraden Rohren nur wenig umgeformten Rohren gefertigt werden können.

Der erfindungsgemäße Hilfsrahmen kann vorzugsweise im Wesentlichen als geschweißte Rahmenstruktur ausgebildet sein.

Hinsichtlich einer bauraumoptimierten Struktur des Hilfsrahmens ist es auch günstig, wenn die Versteifungsstrebe nach einer weiteren Ausgestaltung der Erfindung mindestens zu lang ist wie, vorzugsweise länger ist als der seitlich nach außen vorstehende Trägerabschnitt. Hierdurch lässt sich ein relativ großer Bauraum für die Anordnung einer der Lenkeraufnahmen schaffen und zugleich eine hohe Steifigkeit des Hilfsrahmens im Bereich des zu der betreffenden Lenkeraufnahme benachbarten Karosserie-Anbindungselements sicherstellen.

Eine weitere vorteilhafte Ausgestaltung des erfindungsgemäßen Hilfsrahmens sieht vor, dass die Versteifungsstrebe mit einem zweiten Endabschnitt an dem bezogen auf die Vorwärtsfahrtrichtung hinteren Querträger angeschlossen ist. Hierdurch lässt sich die Steifigkeit, insbesondere die Torsionssteifigkeit des Hilfsrahmens weiter erhöhen. Dabei erstreckt sich die Versteifungsstrebe vorzugsweise auch durch den von den Längsträgern und Querträgern umgrenzten Raum.

Nach einer weiteren Ausgestaltung des erfindungsgemäßen Hilfsrahmens ist die Versteifungsstrebe zusätzlich an einer oder der bezogen auf die Vorwärtsfahrtrichtung hinteren Lenkeraufnahme angeschlossen. Hierdurch wird diese hintere Lenkeraufnahme zusätzlich in Vorwärtsfahrtrichtung abgestützt.

Die Versteifungsstrebe kann in verschiedenen Formen, insbesondere als Blechformteil oder Stanzteil ausgeführt werden. Um bei geringem Bauteilgewicht eine hohe Biege- und/oder Torsionssteifigkeit zu erzielen, ist es allerdings vorteilhaft, wenn die Versteifungsstrebe gemäß einer bevorzugten Ausgestaltung im Querschnitt betrachtet ein im Wesentlichen L-förmiges, U-förmiges, C-förmiges, T-förmiges, Y-förmiges, ringförmiges oder kastenförmiges Profil aufweist. Insbesondere kann die Versteifungsstrebe im Querschnitt betrachtet ein ovales Hohlprofil oder gequetschtes Rohrprofil aufweisen.

Zur Erzielung eines geringen Bauteilgewichts der Versteifungsstrebe bei hoher Biege- und/oder Torsionssteifigkeit ist es auch vorteilhaft, wenn die Versteifungsstrebe gemäß einer bevorzugten Ausgestaltung entlang ihrer Länge eine sich ändernde Dicke und/oder sich ändernde Profilhöhe aufweist.

Vorzugsweise ist die Versteifungsstrebe als Blechformteil ausgeführt. Ferner ist es hinsichtlich kompakter Abmessungen und einer ausreichenden Bewegungsfreiheit des angebundenen Lenkers bzw. Trapezlenkers vorteilhaft, wenn die Versteifungsstrebe gemäß einer bevorzugten Ausgestaltung des Hilfsrahmens bogenförmig ausgeführt ist, wobei die konkave Unterseite der Versteifungsstrebe dem Lenker zugewandt ist.

Die Versteifungsstrebe kann zum Beispiel mittels Schweißverbindungen und/oder Schraubverbindungen und/oder Nietverbindungen und/oder Klebeverbindungen an den besagten Trägerabschnitten oder dem besagten Karosserie-Anbindungselement angeschlossen sein. Vorzugsweise ist die Versteifungsstrebe jedoch durch Schweißverbindungen an den besagten Trägerabschnitten oder dem besagten Karosserie-Anbindungselement angeschlossen.

Zur Erzielung einer hohen Steifigkeit, insbesondere Torsionssteifigkeit des erfindungsgemäßen Hilfsrahmens bei geringem Bauteilgewicht ist es auch vorteilhaft, wenn die Längsträger nach einer bevorzugten Ausgestaltung des Hilfsrahmens aus Rohren gefertigt sind. Vorzugsweise ist auch einer der Querträger oder der bezogen auf die Vorwärtsfahrtrichtung vordere Querträger aus einem Rohr gefertigt. Die Fertigung der Längsträger und/oder des vorderen Querträgers aus einem oder mehreren Rohren bietet zudem Kostenvorteile. Alternativ können die Längsträger und/oder der vordere Querträger des erfindungsgemäßen Hilfsrahmens auch aus einem oder mehreren Pressformteilen und/oder aus einem oder mehreren Stanzteilen gefertigt werden.

Einer der Querträger bzw. der bezogen auf die Vorwärtsfahrtrichtung hintere Querträger weist vorzugsweise ein im Wesentlichen U-förmiges, rohrförmiges, kastenförmiges oder plattenförmiges Profil auf und ist aus einer oder mehreren Blechschalen gebildet. Diese Ausgestaltung ist ebenfalls hinsichtlich der Schaffung von ausreichendem Bauraum für die Anbindung zweier Trapezlenker bei geringem Gewicht und hoher Steifigkeit des Hilfsrahmens von Vorteil. Denn in dem aus einer oder mehreren Blechschalen gebildeten Querträger lassen sich Lenkeraufnahmen zur Anbindung von Lenkern der Radaufhängung, insbesondere von Abschnitten zweier Trapezlenker integrieren.

Eine weitere Ausgestaltung des erfindungsgemäßen Hilfsrahmens ist durch mindestens eine Zusatzstrebe gekennzeichnet, die sich durch den von den Längsträgern und Querträgern umgrenzten Raum erstreckt, mit einem ersten Endabschnitt am vorderen Querträger und/oder an einem der Längsträger angeschlossen ist, mit einem zweiten Endabschnitt am hinteren Querträger angeschlossen ist, und zur Fahrzeuglängsachse unter einem Winkel schräg angestellt ist. Die Zusatzstrebe erhöht ebenfalls die Torsionssteifigkeit des Hilfsrahmens. Sie kann auch mindestens einen Befestigungsabschnitt aufweisen, der zum Beispiel zur Anbindung mindestens einer unter dem Fahrgastraum angeordneten Diagonalstrebe ausgebildet ist. Die Zusatzstrebe ermöglicht die Abstützung der eingeleiteten Kräfte über den Anschlussbereich der Diagonalstreben hinaus bis zu dem vom Fahrgastraum weiter entfernt gelegen bzw. hinteren Querträger.

Nachfolgend wird die Erfindung anhand einer mehrere Ausführungsbeispiele darstellenden Zeichnung näher erläutert. Es zeigen:
- Fig. 1 bis Fig. 3: ein erstes Ausführungsbeispiel eines erfindungsgemäßen Hilfsrahmens in Draufsicht (Fig. 1), Unteransicht (Fig. 2) und einer perspektivischen Darstellung (Fig. 3);
- Fig. 4 bis Fig. 6: ein zweites Ausführungsbeispiel eines erfindungsgemäßen Hilfsrahmens in Draufsicht (Fig. 4), Unteransicht (Fig. 5) und einer perspektivischen Darstellung (Fig. 6); und
- Fig. 7 bis Fig. 9: ein drittes Ausführungsbeispiel eines erfindungsgemäßen Hilfsrahmens in Draufsicht (Fig. 7), Unteransicht (Fig. 8) und einer perspektivischen Darstellung (Fig. 9).

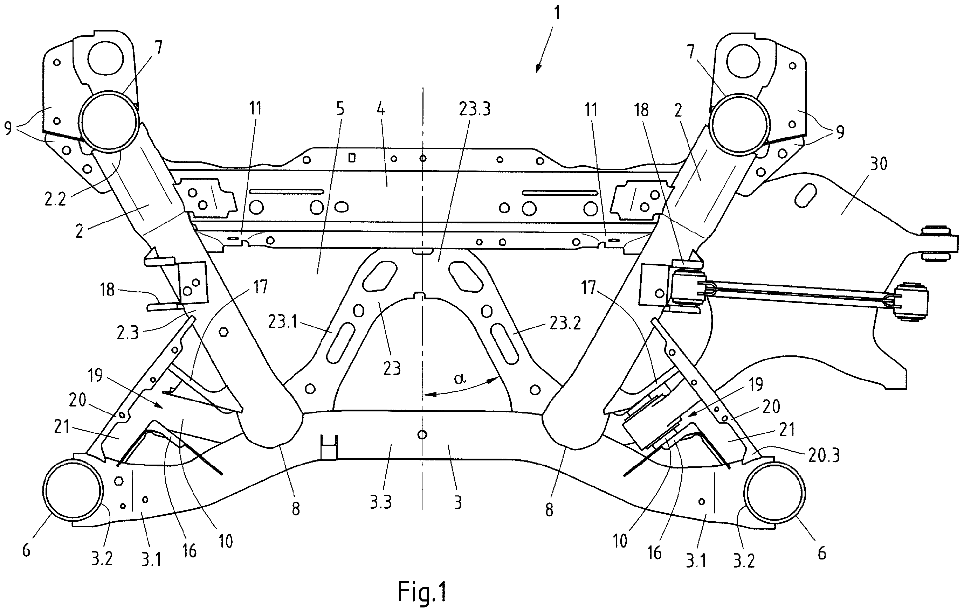

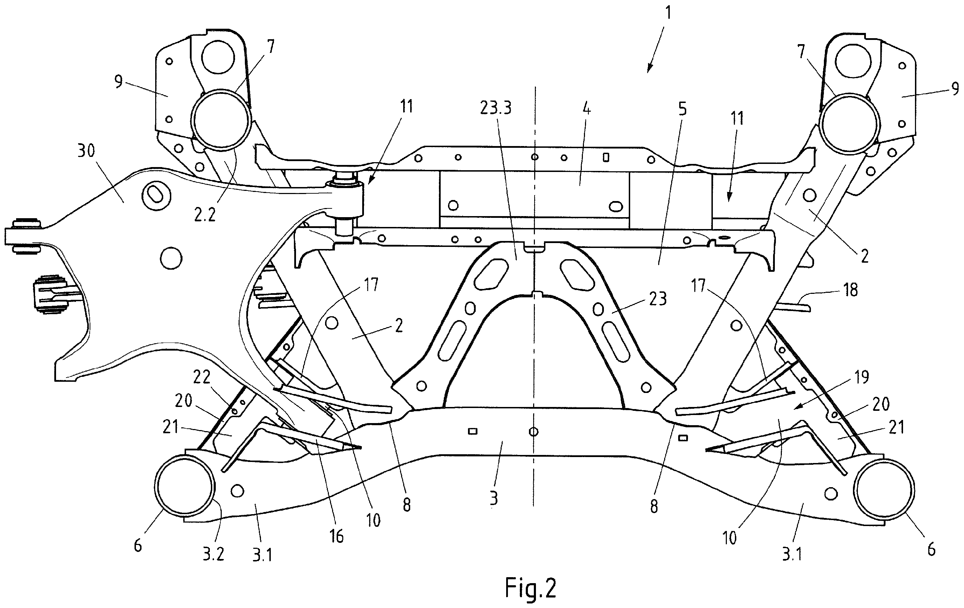

Das in den Fig. 1 bis Fig. 3 dargestellte Ausführungsbeispiel zeigt einen Hilfsrahmen für die Hinterachse eines Kraftfahrzeuges.

Der Hilfsrahmen 1 ist aus zwei sich im Wesentlichen in Fahrzeuglängsrichtung erstreckenden Längsträgern 2, einem ersten oder vorderen Querträger 3 und einem zweiten oder hinteren Querträger 4 aufgebaut. Die beiden in Fahrzeuglängsrichtung voneinander beabstandeten Querträger 3, 4 verbinden die Längsträger 2 miteinander, so dass sich ein Rahmen bzw. ein durch die Träger 2, 3, 4 umgrenzter Raum 5 ergibt.

Der Hilfsrahmen 1 ist mit Karosserie-Anbindungselementen 6, 7 versehen, mittels denen er an der Fahrzeugkarosserie angeschlossen wird. Die Karosserie-Anbindungselemente 6, 7 sind aus Rohrstutzen oder Buchsen gebildet, in die Lager, vorzugsweise Gummibuchsen aufweisende Lager eingesetzt oder eingepresst werden.

Der vordere Querträger 3 ragt seitlich über die mit ihm verbundenen Enden der Längsträger 2 hinaus. Er weist somit Trägerabschnitte 3.1 auf, die gegenüber den Längsträgern 2 bzw. Verbindungsabschnitten 8 seitlich nach außen vorstehen. Die vorderen Karosserie-Anbindungselemente 6 sind an den seitlich nach außen vorstehenden Trägerabschnitten 3.1 angeordnet. Vorzugsweise sind die vorderen Karosserie-Anbindungselemente 6 unmittelbar an den Enden des vorderen Querträgers 3 angeordnet. Hierzu sind die Enden des Querträgers 3 klauenförmig ausgebildet, so dass sie Einbuchtungen 3.2 aufweisen, in welche die buchsenförmigen Karosserie-Anbindungselemente 6 eingesetzt und mit dem Querträger 3 verbunden, vorzugsweise verschweißt sind.

Die hinteren Karosserie-Anbindungselemente 7 sind am hinteren Ende der Längsträger 2 angeordnet. Das dem vorderen Querträger 3 abgewandte Ende des jeweiligen Längsträgers 2 ist vorzugsweise ebenfalls klauenförmig ausgebildet und definiert eine Einbuchtung 2.2, in welche das buchsenförmige Anbindungselement 7 eingesetzt und mit dem jeweiligen Längsträger 2 verbunden, beispielsweise verschweißt ist. An den hinteren Karosserie-Anbindungselemente 7 bzw. Enden der Längsträger 2 sind Halterungen oder Befestigungskonsolen 9 zur Anbindung weiterer Fahrzeugteile angebracht.

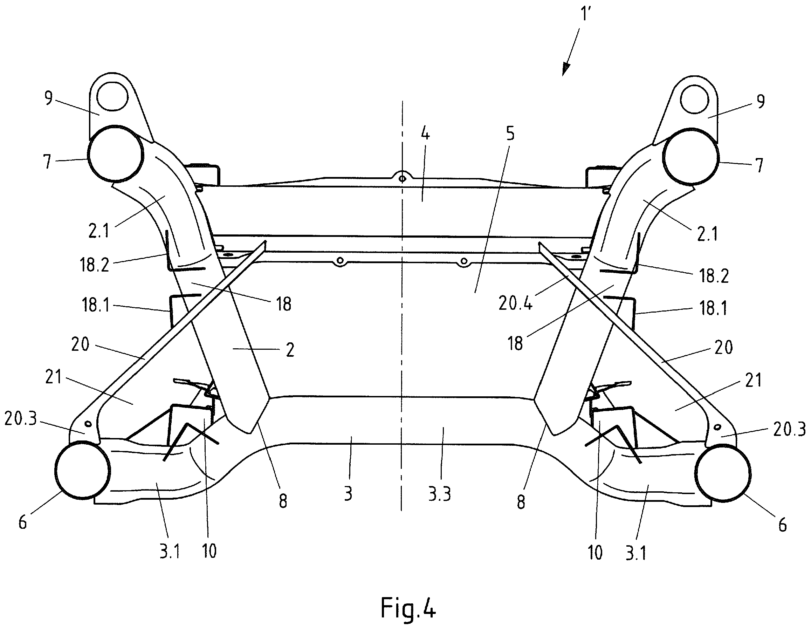

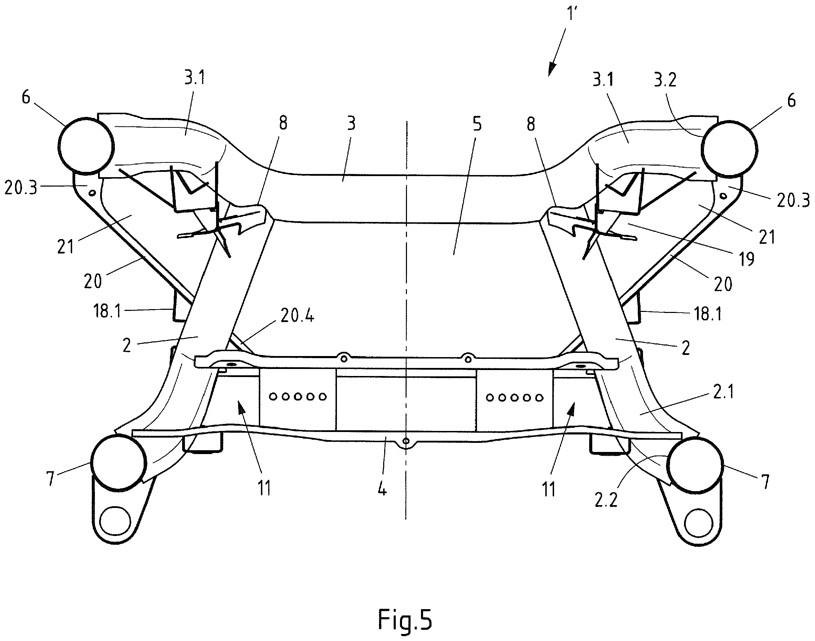

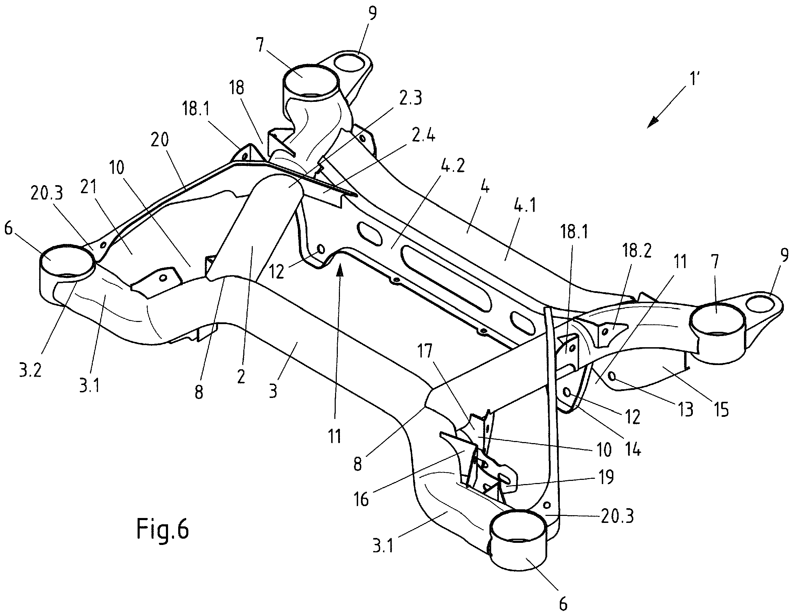

Die Längsträger 2 sind aus Rohren oder Rohrstücken gefertigt. Der vordere Querträger 3 ist vorzugsweise ebenfalls aus einem Rohr gefertigt. Die Längsträger 2 können im Wesentlichen gerade ausgebildet sein. Ihre dem vorderen Querträger 3 abgewandten Endabschnitte 2.1 können allerdings auch seitlich nach außen gebogen sein (vgl. Fig. 4 bis Fig. 6).

Die Endabschnitte 3.1 oder seitlich nach außen vorstehenden Abschnitte des vorderen Querträgers 3 sind S-förmig geschwungen oder gekröpft ausgebildet, so dass der zwischen den Längsträgern 2 im Wesentlichen gerade verlaufende Abschnitt 3.3 des Querträgers 3 gegenüber den Enden bzw. Anbindungselementen 6 des Querträgers 3 nach hinten versetzt ist. Der Versatz kann dabei dem Maß des Innendurchmessers des buchsenförmigen Karosserie-Anbindungselements 6 entsprechen oder auch größer sein.

Die die Karosserie-Anbindungselemente 6, 7 tragenden Enden des rohrförmigen Querträgers 3 bzw. der rohrförmigen Längsträger 2 sind vorzugsweise soweit zusammengepresst, dass das im Wesentlichen kreisförmige Querschnittsprofil des Längsträgers 2 bzw. vorderen Querträgers 3, wie es insbesondere an den Verbindungsabschnitten 8 der Träger 2, 3 vorhanden ist, in ein im Wesentlichen ovales Querschnittsprofil umgeformt ist.

Im Unterschied zu dem ersten oder vorderen Querträger 3 weist der zweite oder hintere Querträger 4 ein im Wesentlichen U-förmiges Profil auf und ist aus einer einzelnen, zwei oder mehreren Blechschalen 4.1, 4.2 zusammengesetzt.

Des Weiteren weist der Hilfsrahmen 1 je Fahrzeugseite vordere und hintere Lenkeraufnahmen 10, 11 auf, die in Fahrzeuglängsrichtung voneinander beabstandet sind und der Anbindung zweier Trapezlenker 30 dienen. Die hinteren Lenkeraufnahmen sind in dem hinteren Querträger 4 integriert. Hierzu weist der Querträger 4 zwei Paare von miteinander fluchtenden Öffnungen 12, 13 zur Durchführung eines Lagerbolzens auf. Die Öffnungen 12, 13 sind vorzugsweise in nach unten vorstehenden Blechabschnitten oder Ohren 14, 15 der U-Profilschenkel des Querträgers 4 ausgebildet.

Die vorderen Lenkeraufnahmen 10 zur Anbindung von Abschnitten der Trapezlenker sind in den zwickelförmigen Bereichen des Hilfsrahmens 1 angeordnet, die durch die Längsträger 2 und die seitlich vorstehenden Abschnitte 3.1 des vorderen Querträgers 3 definiert sind. Diese Lenkeraufnahmen 10 sind jeweils durch zwei Konsolbleche (Blechformteile) 16, 17 realisiert, die paarweise an dem Hilfsrahmen 1 befestigt, beispielsweise angeschweißt sind. Vorzugsweise ist eines (17) dieser beiden Blechformteile (Konsolbleche) 16, 17 mit einem der Längsträger 2 verbunden, während das andere Blechformteil (Konsolblech) 16 mit den seitlich vorstehenden Abschnitt 3.1 des vorderen Querträgers 3 verbunden ist.

Zudem sind an den Längsträgern 2 Lenkeraufnahmen 18 zur Anbindung von oberen Querlenkern angebracht, vorzugsweise angeschweißt. Diese Lenkeraufnahmen 18, die beispielsweise aus einstückigen, gabelförmigen Blechformteilen bestehen, sind zwischen den vorderen und hinteren Lenkeraufnahmen 10, 11 angeordnet und im Wesentlichen auf die Oberseite der Längsträger 2 aufgesetzt.

Des Weiteren ist der Hilfsrahmen 1 mit Lenkeraufnahmen 19 zur Anbindung von unteren Querlenkern versehen. Diese Lenkeraufnahmen 19 befinden sich unterhalb der vorderen Lenkeraufnahmen 10, welche der Anbindung von Abschnitten der Trapezlenker dienen. Vorzugsweise sind die Lenkeraufnahmen 19 ebenfalls durch die Blechformteile (Konsolbleche) 16, 17 definiert, welche die vorderen Lenkeraufnahmen 10 zur Anbindung der vorderen Abschnitte der Trapezlenker 30 definieren.

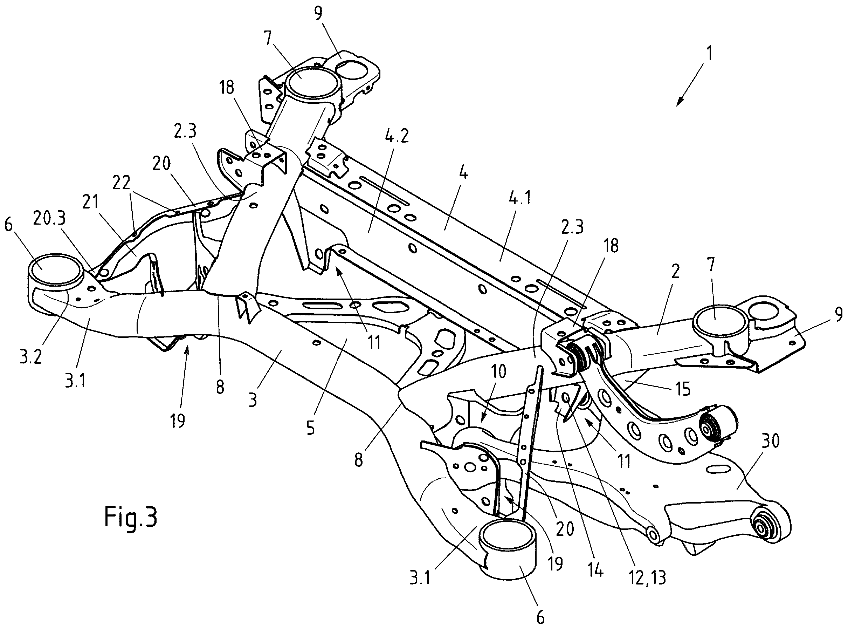

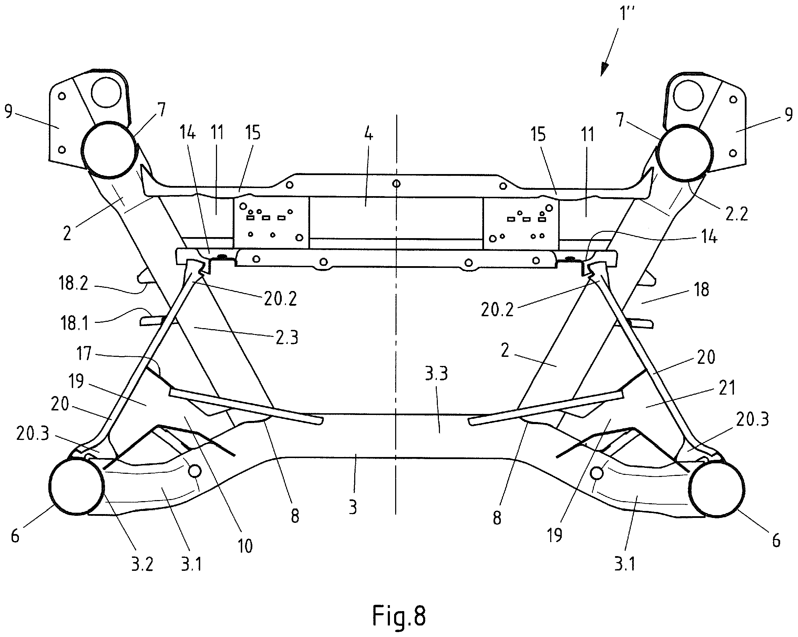

Darüber hinaus ist der Hilfsrahmen 1 je Längsträger mit mindestens einer Versteifungsstrebe 20 versehen. In dem in den Figuren 1 bis 3 dargestellten Ausführungsbeispiel sind Versteifungsstreben 20 mit einem Endabschnitt 20.3 an den seitlich nach außen vorstehenden Abschnitt 3.1 des vorderen Querträgers 3 angeschlossen, und zwar an das Ende oder nahe dem Ende des Querträgers 3. Alternativ oder zusätzlich kann die jeweilige Versteifungsstrebe 20 mit einem Endabschnitt 20.3 auch an eines der vorderen Karosserie-Anbindungselemente 6 angeschlossen sein (siehe Figuren 4 bis 6 sowie Figuren 7 bis 9). Ferner ist die jeweilige Versteifungsstrebe 20 an einen Abschnitt 2.3 des ihr zugeordneten Längsträgers 2 angeschlossen, wobei sich die Anschlussstelle zwischen den beiden Lenkeraufnahmen 10, 11 befindet, die der Anbindung des rechten bzw. linken Trapezlenkers 30 an dem Hilfsrahmen 1 dienen (Fig. 3). Die Versteifungsstrebe 20 kann auch als Diagonalstrebe oder diagonale Versteifungsstrebe bezeichnet werden.

Der Längsträger 2, der seitlich nach außen vorstehende Abschnitt 3.1 des ersten oder vorderen Querträgers 3 und die Versteifungsstrebe 20 umgrenzen zusammen eine durchgängige Öffnung 21. Sie definieren eine im Wesentlichen dreieckige oder dreischenklige Struktur. Dementsprechend ist die Öffnung 21 im Wesentlichen dreieckig ausgebildet. Bei Betrachtung des Hilfsrahmens in Draufsicht umschließt die Öffnung 21 die vordere, der Anbindung eines Abschnitts des Trapezlenkers 30 dienende Lenkeraufnahme 10 im Wesentlichen vollständig. Die Versteifungsstrebe 20 ist hierzu vorzugsweise länger bemessen als der seitlich nach außen vorstehende Abschnitt 3.1 des Querträgers 3.

Eines der Blechformteile (Konsolbleche) 16, 17 ist so ausgebildet, dass es einen mit der Versteifungsstrebe 20 verbundenen Abschnitt 17.1 aufweist. Durch diese Verbindung ergibt sich eine vorteilhafte Abstützung und Versteifung insbesondere der Lenkeraufnahme 10.

Die Versteifungsstreben 20 weisen im Querschnitt betrachtet beispielsweise ein im Wesentlichen L-förmiges Profil aufweist. Auch ist insbesondere in den Figuren 1 bis 3 gezeigt, dass die Versteifungsstreben 20 in Draufsicht betrachtet im Wesentlichen gerade und seitlich betrachtet bogenförmig ausgebildet sind, wobei die konkave Kante des Schenkels des L-Profils nach unten weist. Des Weiteren ist insbesondere in Fig. 3 zu sehen, dass sich die Dicke und die Profilhöhe der Versteifungsstrebe 20 entlang ihrer Länge ändern, wodurch die Versteifungsstrebe 20 bei möglichst geringem Bauteilgewicht an die aufzunehmenden Kräfte angepasst ist.

Die Versteifungsstreben 20 sind vorzugsweise mittels Schweißverbindungen an die besagten Stellen des Hilfsrahmens 1 angeschlossen. Alternativ können sie aber auch mittels Schraubverbindungen an die besagten Stellen des Hilfsrahmens 1 angeschlossen sein.

Die Versteifungsstreben 20 können zusätzlich auch zur Führung und Befestigung von Leitungen, z.B. Brems- oder Elektroleitungen genutzt werden. Hierzu können die Versteifungsstreben 20 Befestigungslöcher 22 aufweisen, an denen z.B. Kabelbinder angebunden oder in die z.B. Clipelemente eingerastet werden können.

Wie in den Figuren 1 bis 3 gezeigt ist, kann der erfindungsgemäße Hilfsrahmen 1 optional mindestens eine Zusatzstrebe 23 aufweisen, die sich durch den von den Längsträgern 2 und Querträgern 3, 4 umgrenzten Raum 5 erstreckt, mit einem ersten Endabschnitt am vorderen Querträger 3 und an einem der Längsträger 2 angeschlossen ist, mit einem zweiten Endabschnitt am hinteren Querträger 4 angeschlossen ist und zur Fahrzeuglängsachse unter einem Winkel α schräg angestellt ist. In dem in den Figuren 1 bis 3 dargestellten Ausführungsbeispiel ist die Zusatzstrebe 23 doppelt oder im Wesentlichen V-förmig ausgeführt, wobei der Umkehrabschnitt 23.3 der Zusatzstrebe am mittleren Abschnitt des hinteren Querträgers 4 angeschlossen ist. Der jeweilige Arm 23.1, 23.2 der Zusatzstrebe 23 weist ein U-förmiges Querschnittprofil auf. Aus Gründen des Leichtbaus sind in der Zusatzstrebe 23 mehrere Durchgangsöffnungen ausgebildet, die das Gewicht der Zusatzstrebe 23 reduzieren.

In den Figuren 4 bis 9 ist die (optionale) Zusatzstrebe 23 nicht gezeigt.

Das in den Figuren 4 bis 6 dargestellte Ausführungsbeispiel des erfindungsgemäßen Hilfsrahmens 1' unterscheidet sich von dem in den Figuren 1 bis 3 gezeigten Ausführungsbeispiel außer durch die gebogene Form der Längsträger 2 dadurch, dass die Versteifungsstrebe 20 mit einem Endabschnitt 20.4 an den hinteren Querträger 4 angeschlossen ist. Die Versteifungsstrebe 20 ist hier also ausgehend von dem vorderen buchsenförmigen Karosserie-Anbindungselement 6 über den Längsträger 2 hinaus verlängert und erstreckt sich durch den von den Längsträgern 2 und Querträgern 3, 4 umgrenzten Raum 5.

Die Lenkeraufnahmen 18 zur Anbindung der oberen Querlenker sind in dem in den Figuren 4 bis 6 dargestellten Ausführungsbeispiel jeweils aus zwei separat gefertigten Formblechteilen (Konsolblechen) 18.1, 18.2 aufgebaut. Vorzugsweise ist das vordere Formblechteil 18.1 der beiden Formblechteile mit der Versteifungsstrebe 20 verbunden, z.B. verschweißt, und somit durch letztere abgestützt.

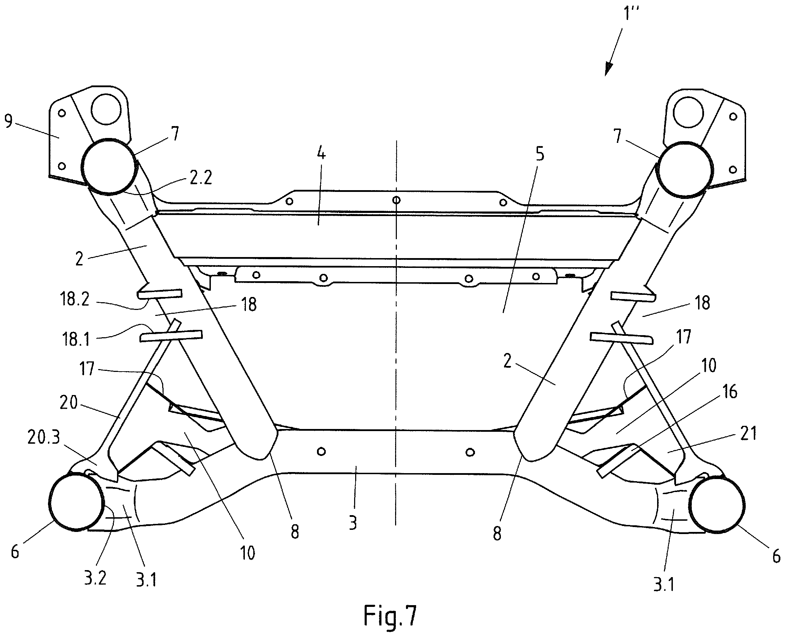

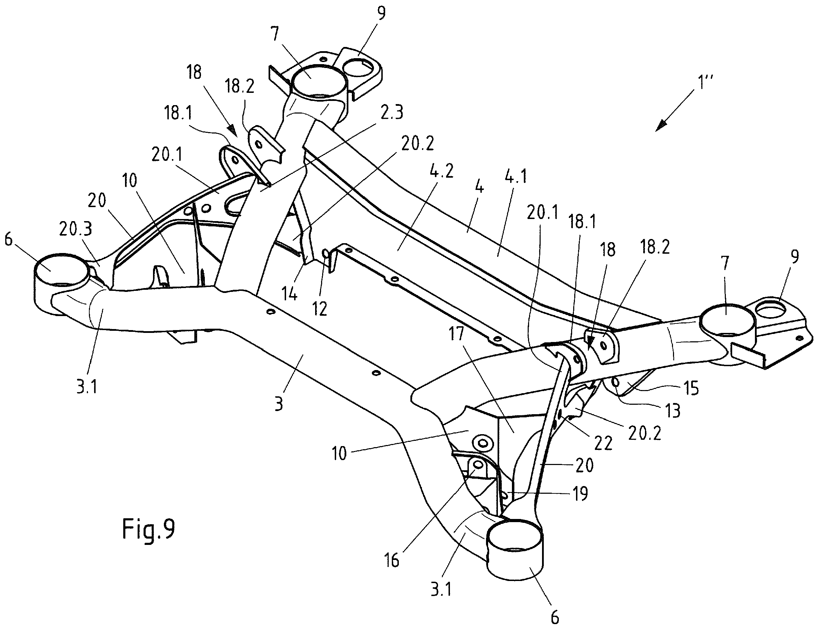

Das in den Figuren 7 bis 9 gezeigte Ausführungsbeispiel des erfindungsgemäßen Hilfsrahmens 1" unterscheidet sich von den anderen in der Zeichnung dargestellten Ausführungsbeispielen dadurch, dass die Versteifungsstrebe 20 zusätzlich an der hinteren Lenkeraufnahme 11 angeschlossen ist. In Fig. 9 ist gut zu erkennen, dass die Versteifungsstrebe 20 ausgehend von dem vorderen buchsenförmigen Karosserie-Anbindungselement 6 zunächst einarmig ausgebildet ist und sich im Bereich des Längsträgers 2 in einen oberen Arm 20.1 und einen unteren Arm 20.2 gabelt. Der obere Arm 20.1 ist dabei mit dem vorderen Formblechteil (Ohr) 18.1 der oberen Querlenkeraufnahme 18 verbunden, während der untere, längere Arm 20.2 mit dem vorderen, nach unten vorstehenden, ein Lagerauge 12 aufweisenden Abschnitt 14 des hinteren Querträgers 4 verbunden ist. Diese als Abstützung wirkenden Verbindungen sind vorzugsweise als Schweißverbindungen ausgeführt.

Die Ausführung der Erfindung ist nicht auf die in der Zeichnung dargestellten Ausführungsbeispiele beschränkt. Vielmehr sind zahlreiche Varianten denkbar, die auch bei einer von den Ausführungsbeispielen abweichenden Gestaltung von der in den beiliegenden Ansprüchen angegebenen Erfindung Gebrauch machen. Beispielsweise können die Versteifungsstreben 20 im Querschnitt betrachtet anstelle eines L-förmigen Profils auch ein im Wesentlichen U-förmiges, C-förmiges, T-förmiges, Y-förmiges, ringförmiges oder kastenförmiges Profil aufweisen. Insbesondere können die Versteifungsstrebe 20 im Querschnitt betrachtet auch ein ovales Hohlprofil oder gequetschtes Rohrprofil aufweisen.

## Patentansprüche

1. Hilfsrahmen (1, 1', 1"), insbesondere Hinterachshilfsrahmen, für ein Kraftfahrzeug, mit mindestens zwei Längsträgern (2), mindestens zwei Querträgern (3, 4), welche die Längsträger (2) miteinander verbinden und in Fahrzeuglängsrichtung voneinander beabstandet sind, Karosserie-Anbindungselementen (6), die an Trägerabschnitten (3.1) des Hilfsrahmens (1, 1', 1") angeordnet sind, welche gegenüber einem Verbindungsabschnitt (8), an welchem einer der Längsträger (2) mit einem der Querträger (3) verbunden ist, seitlich nach außen vorstehen, und mit einer vorderen und einer hinteren Lenkeraufnahme (10, 11) je Fahrzeugseite, die in Fahrzeuglängsrichtung voneinander beabstandet sind,
**dadurch gekennzeichnet, dass** je Fahrzeugseite mindestens eine Versteifungsstrebe (20) vorgesehen ist, die an einen Abschnitt (2.3) eines der Längsträger (2) angeschlossen ist, welcher sich zwischen den Lenkeraufnahmen (10, 11) befindet, und die mit einem Endabschnitt (20.3) an eines der Karosserie-Anbindungselemente (6) oder an einen der seitlich nach außen vorstehenden Trägerabschnitte (3.1) angeschlossen ist.

2. Hilfsrahmen nach Anspruch 1, **dadurch gekennzeichnet, dass** der Längsträger (2), der seitlich nach außen vorstehende Trägerabschnitt (3.1) und die Versteifungsstrebe (20) zusammen eine durchgängige Öffnung (21) umgrenzen, die eine der Lenkeraufnahmen (10) vollständig oder teilweise umschließt.

3. Hilfsrahmen nach Anspruch 1 oder 2, **dadurch gekennzeichnet, dass** die seitlich nach außen vorstehenden Trägerabschnitte (3.1) Abschnitte eines der Querträger, vorzugsweise des bezogen auf die Vorwärtsfahrtrichtung vorderen Querträgers (3) sind.

4. Hilfsrahmen nach einem der Ansprüche 1 bis 3, **dadurch gekennzeichnet, dass** die Versteifungsstrebe (20) mindestens zu lang ist wie, vorzugsweise länger ist als der seitlich nach außen vorstehende Trägerabschnitt (3.1).

5. Hilfsrahmen nach einem der Ansprüche 1 bis 4, **dadurch gekennzeichnet, dass** die Versteifungsstrebe (20) mit einem zweiten Endabschnitt (20.4) an dem bezogen auf die Vorwärtsfahrtrichtung hinteren Querträger (4) angeschlossen ist.

6. Hilfsrahmen nach Anspruch 5, **dadurch gekennzeichnet, dass** sich die Versteifungsstrebe (20) auch durch den von den Längsträgern (2) und Querträgern (3, 4) umgrenzten Raum (5) erstreckt.

7. Hilfsrahmen nach einem der Ansprüche 1 bis 6, **dadurch gekennzeichnet, dass** die Versteifungsstrebe (20, 20.2) zusätzlich an einer oder der bezogen auf die Vorwärtsfahrtrichtung hinteren Lenkeraufnahme (11) angeschlossen ist.

8. Hilfsrahmen nach einem der Ansprüche 1 bis 7, **dadurch gekennzeichnet, dass** die Versteifungsstrebe (20) im Querschnitt betrachtet ein im Wesentlichen L-förmiges, U-förmiges, C-förmiges, T-förmiges, Y-förmiges, ringförmiges oder kastenförmiges Profil aufweist.

9. Hilfsrahmen nach einem der Ansprüche 1 bis 8, **dadurch gekennzeichnet, dass** die Versteifungsstrebe (20) entlang ihrer Länge eine sich ändernde Dicke und/oder sich ändernde Profilhöhe aufweist.

10. Hilfsrahmen nach einem der Ansprüche 1 bis 9, **dadurch gekennzeichnet, dass** die Versteifungsstrebe (20) mittels Schweißverbindungen und/oder Schraubverbindungen und/oder Nietverbindungen und/oder Klebeverbindungen an den besagten Trägerabschnitten (3.1, 2.3) oder dem besagten Karosserie-Anbindungselement (6) angeschlossen ist.

11. Hilfsrahmen nach einem der Ansprüche 1 bis 10, **dadurch gekennzeichnet, dass** die Längsträger (2) aus Rohren und/oder Pressformteilen und/oder Stanzteilen gefertigt sind.

12. Hilfsrahmen nach einem der Ansprüche 1 bis 11, **dadurch gekennzeichnet, dass** einer der Querträger (3) oder der bezogen auf die Vorwärtsfahrtrichtung vordere Querträger (3) aus einem Rohr und/oder Pressformteil und/oder Stanzteil gefertigt ist.

13. Hilfsrahmen nach einem der Ansprüche 1 bis 12, **dadurch gekennzeichnet, dass** einer der Querträger (4) oder der bezogen auf die Vorwärtsfahrtrichtung hintere Querträger (4) ein im Wesentlichen U-förmiges, rohrförmiges, kastenförmiges oder plattenförmiges Profil aufweist und aus einer oder mehreren Blechschalen (4.1, 4.2) gebildet ist.

14. Hilfsrahmen (1, 1', 1") nach einem der Ansprüche 1 bis 13, **dadurch gekennzeichnet, dass** er als geschweißte Rahmenstruktur ausgebildet ist.

15. Hilfsrahmen nach einem der Ansprüche 1 bis 14, **gekennzeichnet durch** mindestens eine Zusatzstrebe (23), die sich durch den von den Längsträgern (2) und Querträgern (3, 4) umgrenzten Raum (5) erstreckt, mit einem ersten Endabschnitt am vorderen Querträger (3) und/oder an einem der Längsträger (2) angeschlossen ist, mit einem zweiten Endabschnitt am hinteren Querträger (4) angeschlossen ist, und zur Fahrzeuglängsachse unter einem Winkel (α) schräg angestellt ist.

## Claims

1. Subframe (1, 1', 1"), in particular a rear axle subframe, for a motor vehicle, comprising at least two side members (2), at least two crossmembers (3, 4) which interconnect the side members (2) and are spaced apart from one another in the longitudinal direction of the vehicle, vehicle body connection elements (6) which are arranged on support portions (3.1) of the subframe (1, 1', 1") that protrude laterally outwards from a connection portion (8) at which one of the side members (2) is connected to one of the crossmembers (3), and comprising a front and a rear link bracket (10, 11) at each side of the vehicle which are spaced apart from one another in the longitudinal direction of the vehicle,
**characterised in that** at each side of the vehicle at least one reinforcement brace (20) is provided, which reinforcement brace is attached to a portion (2.3) of one of the side members (2) which is between the link brackets (10, 11), and is attached by means of an end portion (20.3) to one of the vehicle body connection elements (6) or to one of the support portions (3.1) which protrude laterally outwards.

2. Subframe according to claim 1, **characterised in that** the side member (2), the support portion (3.1) which protrudes laterally outwards, and the reinforcement brace (20) together define a through-opening (21) which encloses one of the link brackets (10) completely or in part.

3. Subframe according to either claim 1 or claim 2, **characterised in that** the support portions (3.1) which protrude laterally outwards are portions of one of the crossmembers, preferably of the crossmember (3) which is at the front in relation to the forward direction of travel.

4. Subframe according to any of claims 1 to 3, **characterised in that** the reinforcement brace (20) is at least as long as, preferably longer than, the support portion (3.1) which protrudes laterally outwards.

5. Subframe according to any of claims 1 to 4, **characterised in that** the reinforcement brace (20) is attached by means of a second end portion (20.4) to the crossmember (4) which is at the rear in relation to the forward direction of travel.

6. Subframe according to claim 5, **characterised in that** the reinforcement brace (20) also extends through the space (5) which is delimited by the side members (2) and crossmembers (3, 4).

7. Subframe according to any of claims 1 to 6, **characterised in that** the reinforcement brace (20, 20.2) is additionally attached to a or the link bracket (11) which is at the rear in relation to the forward direction of travel.

8. Subframe according to any of claims 1 to 7, **characterised in that** the reinforcement brace (20), when viewed in cross section, has a substantially L-shaped, U-shaped, C-shaped, T-shaped, Y-shaped, annular or box-shaped profile.

9. Subframe according to any of claims 1 to 8, **characterised in that** the reinforcement brace (20) has, along the length thereof, a varying thickness and/or varying profile height.

10. Subframe according to any of claims 1 to 9, **characterised in that** the reinforcement brace (20) is attached to said support portions (3.1, 2.3) or to said vehicle body connection element (6) by means of weld joints and/or threaded joints and/or rivet joints and/or adhesive joints.

11. Subframe according to any of claims 1 to 10, **characterised in that** the side members (2) are made of tubes and/or press-mould parts and/or stamped parts.

12. Subframe according to any of claims 1 to 11, **characterised in that** one of the crossmembers (3) or the crossmember (3) which is at the front in relation to the forward direction of travel is made of a tube and/or press-mould part and/or stamped part.

13. Subframe according to any of claims 1 to 12, **characterised in that** one of the crossmembers (4) or the crossmember (4) which is at the rear in relation to the forward direction of travel has a substantially U-shaped, tube-shaped, box-shaped or planar profile and is formed of one or more sheet metal shells (4.1, 4.2).

14. Subframe (1, 1', 1") according to any of claims 1 to 13, **characterised in that** it is designed as a welded frame structure.

15. Subframe according to any of claims 1 to 14, **characterised by** at least one additional brace (23), which extends through the space (5) delimited by the side members (2) and crossmembers (3, 4), is attached by means of a first end portion to the front crossmember (3) and/or to one of the side members (2), is attached by means of a second end portion to the rear crossmember (4), and is positioned obliquely to the longitudinal axis of the vehicle at an angle (α).

## Revendications

1. Cadre auxiliaire (1, 1', 1"), en particulier cadre auxiliaire d'essieu arrière, pour un véhicule automobile, ledit cadre auxiliaire comprenant au moins deux longerons (2), au moins deux traverses (3, 4) qui relient l'un à l'autre les longerons (2) et sont espacées l'une de l'autre dans la direction longitudinale du véhicule, comprenant des éléments de fixation (6) sur la carrosserie, éléments de fixation (6) qui sont disposés sur des parties de support (3.1) du cadre auxiliaire (1, 1', 1"), parties de support qui, par rapport à une partie d'assemblage (8) sur laquelle l'un des longerons (2) est assemblé avec l'une des traverses (3), sont en saillie latéralement vers l'extérieur, et comprenant, de chaque côté du véhicule, un logement avant et arrière (10, 11) des bras oscillants, logements des bras oscillants qui sont espacés l'un de l'autre dans la direction longitudinale du véhicule,
**caractérisé en ce qu'**il est prévu, de chaque côté du véhicule, au moins une contrefiche de renfort (20) qui est relié à une partie (2.3) de l'un des longerons (2), partie qui se trouve entre les logements (10, 11) des bras oscillants, ladite contrefiche de renfort étant relié, par une partie d'extrémité (20.3), à l'un des éléments de fixation (6) sur la carrosserie, ou bien relié à l'une des parties de support (3.1) faisant saillie latéralement vers l'extérieur.

2. Cadre auxiliaire selon la revendication 1, **caractérisé en ce que** le longeron (2), la partie de support (3.1) faisant saillie latéralement vers l'extérieur et la contrefiche de renfort (20) délimitent ensemble une ouverture de passage (21) qui entoure en totalité ou en partie l'un des logements (10) des bras oscillants.

3. Cadre auxiliaire selon la revendication 1 ou 2, **caractérisé en ce que** les parties de support (3.1) faisant saillie latéralement vers l'extérieur sont des parties de l'une des traverses, de préférence de la traverse avant (3) par rapport au sens de marche vers l'avant.

4. Cadre auxiliaire selon l'une quelconque des revendications 1 à 3, **caractérisé en ce que** la contrefiche de renfort (20) est au moins aussi long, de préférence est plus long que la partie de support (3.1) faisant saillie latéralement vers l'extérieur.

5. Cadre auxiliaire selon l'une quelconque des revendications 1 à 4, **caractérisé en ce que** la contrefiche de renfort (20) est relié, par une seconde partie d'extrémité (20.4), à la traverse arrière (4) par rapport au sens de marche vers l'avant.

6. Cadre auxiliaire selon la revendication 5, **caractérisé en ce que** la contrefiche de renfort (20) s'étend également à travers l'espace (5) délimité par les longerons (2) et par les traverses (3, 4).

7. Cadre auxiliaire selon l'une quelconque des revendications 1 à 6, **caractérisé en ce que** la contrefiche de renfort (20, 20.2) est relié en outre à l'un des logements des bras oscillants, ou bien au logement arrière (11) des bras oscillants par rapport au sens de marche vers l'avant.

8. Cadre auxiliaire selon l'une quelconque des revendications 1 à 7, **caractérisé en ce que** la contrefiche de renfort (20), vu en section, présente un profil essentiellement en forme de L, en forme de U, en forme de C, en forme de T, en forme de Y, de forme annulaire ou en forme de caisson.

9. Cadre auxiliaire selon l'une quelconque des revendications 1 à 8, **caractérisé en ce que** la contrefiche de renfort (20) présente, le long de sa longueur, une épaisseur se modifiant et/ou une hauteur de profil se modifiant.

10. Cadre auxiliaire selon l'une quelconque des revendications 1 à 9, **caractérisé en ce que** la contrefiche de renfort (20) est relié auxdites parties de support (3.1, 2.3) ou audit élément de fixation (6) sur la carrosserie, au moyen d'assemblages soudés et/ou d'assemblages par vis et/ou au moyen d'assemblages rivés et/ou d'assemblages collés.

11. Cadre auxiliaire selon l'une quelconque des revendications 1 à 10, **caractérisé en ce que** les longerons (2) sont fabriqués à partir de tubes et/ou de pièces moulées par pression et/ou à partir de pièces estampées.

12. Cadre auxiliaire selon l'une quelconque des revendications 1 à 11, **caractérisé en ce que** l'une des traverses (3), ou bien la traverse avant (3) par rapport au sens de marche vers l'avant, est fabriquée à partir d'un tube et/ou d'une pièce moulée par pression et/ou à partir d'une pièce estampée.

13. Cadre auxiliaire selon l'une quelconque des revendications 1 à 12, **caractérisé en ce que** l'une des traverses (4), ou bien la traverse arrière (4) par rapport au sens de marche vers l'avant, présente un profil essentiellement en forme de U, de forme tubulaire, en forme de caisson ou en forme de plaque et est formée en se composant d'une ou de plusieurs coquilles de tôle (4.1, 4.2).

14. Cadre auxiliaire (1, 1', 1") selon l'une quelconque des revendications 1 à 13, **caractérisé en ce qu'**il est conçu comme une structure de cadre soudée.

15. Cadre auxiliaire selon l'une quelconque des revendications 1 à 14, **caractérisé par** au moins une contrefiche supplémentaire (23) qui s'étend à travers l'espace (5) délimité par les longerons (2) et par les traverses (3, 4), contrefiche supplémentaire qui est relié, par une première partie d'extrémité, à la traverse avant (3) et/ou à l'un des longerons (2), qui est relié à la traverse arrière (4) par une seconde partie d'extrémité, et qui est placé de manière inclinée suivant un angle (α) par rapport à l'axe longitudinal du véhicule.
